# EUROPÄISCHE PATENTSCHRIFT

(11) **EP 3 152 655 B1**
(45) Veröffentlichungstag und Bekanntmachung des Hinweises auf die Patenterteilung: **13.06.2018**
(21) Anmeldenummer: 15720908.1
(22) Anmeldetag: 17.04.2015
(51) Int. Cl.: G06F 9/445

(54) **KRAFTFAHRZEUG-STEUERGERÄT MIT SOFTWARE-UPDATE-MODUS FÜR EINE PARKPHASE**
MOTOR-VEHICLE CONTROL UNIT HAVING A CURRENT-SAVING MODE FOR A PARKING PHASE
APPAREIL DE COMMANDE D'UN VÉHICULE AUTOMOBILE AVEC MODE D'ÉCONOMIE D'ÉNERGIE POUR UNE PHASE DE STATIONNEMENT

(30) Priorität: 07.06.2014 DE 102014008479
(43) Veröffentlichungstag der Anmeldung: 12.04.2017
(73) Patentinhaber: Audi AG, 85045 Ingolstadt (DE)
(72) Erfinder: DALKE, Christoph, 85110 Kipfenberg (DE); GRUBER, Christian, 85051 Ingolstadt (DE); SCHMAILZL, Michael, 85092 Kösching (DE); PAFFEN, Matthijs, 85123 Karlskron (DE)
(74) Vertreter: Bauer, Dominik Michael
(86) Internationale Anmeldenummer: PCT/EP2015/000810
(87) Internationale Veröffentlichungsnummer: WO 2015/185173

(56) Entgegenhaltungen:
- EP-A1- 1 699 031
- EP-A1- 2 416 243
- DE-A1-102013 216 055
- JP-A- 2010 243 339
- US-A- 5 442 553
- US-A1- 2009 300 595

## Beschreibung

Die Erfindung betrifft ein Kraftfahrzeug mit mindestens einem Steuergerät, bei welchem während einer Parkphase des Kraftfahrzeugs mindestens eine elektrische Komponente zum Reduzieren eines Energieverbrauchs abgeschaltet ist. Zu der Erfindung gehört auch ein Verfahren zum Betreiben eines Kraftfahrzeug-Steuergeräts, um in Abhängigkeit von einem Zündung-Aus-Signal mindestens eine elektronische Komponente des Steuergeräts abgeschaltet wird.

Ein Steuergerät eines Kraftfahrzeugs kann programmierbar ausgestaltet sein, wobei in einer Speichereinrichtung des Steuergeräts eine Betriebssoftware gespeichert ist und die Betriebssoftware von einer Prozessoreinrichtung des Steuergeräts ausgeführt wird und hierdurch Funktionalitäten des Steuergeräts in dem Kraftfahrzeug bereitgestellt werden. Stellt sich heraus, dass die Betriebssoftware veraltet oder fehlerhaft ist, so ist ein Update der Betriebssoftware nötig, bei welchem die Betriebssoftware zumindest teilweise durch Update-Daten ersetzt wird. Hierbei ist man bestrebt, das Update durch den Benutzer des Kraftfahrzeugs selbst durchführen zu lassen, damit dieser das Kraftfahrzeug nicht in eine Werkstatt bringen muss, um dort vom Servicepersonal unterstützt zu werden. Das Dokument EP 2 416 243 A1 offenbart ein Verfahren zum Betreiben eines Steuergeräts eines Kraftfahrzeugs während einer Parkphase, in welcher eine Zündung des Kraftfahrzeugs zum Abschalten von Geräten des Kraftfahrzeug ausgeschaltet ist, wobei bei dem Verfahren ein zum Einleiten der Parkphase in dem Kraftfahrzeug ausgesendetes Zündung-aus-Signal durch das Steuergerät empfangen wird und daraufhin mindestens eine elektronische Komponente des Steuergeräts abgeschaltet wird, wobei nach Empfangen des Zündung-aus-Signals in dem Steuergerät ein Prozessorkern und eine Speichereinrichtung, in welcher eine für einen Betrieb des Steuergeräts bei eingeschalteter Zündung vorgesehene Betriebssoftware gespeichert ist, betrieben werden und während der Parkphase ein Update der Betriebssoftware durch den Prozessorkern auf der Grundlage von Update-Daten durchgeführt wird.

Aus der US 2008/0108335 A1 ist bekannt, dass Servicedaten für ein Update eines Steuergeräts über eine Internetverbindung von einem Wartungsbetrieb für das Kraftfahrzeug an das Steuergerät eines Kraftfahrzeugs übertragen werden können.

Während eines Updates kann in der Regel das Steuergerät nicht in der vorgesehenen Weise im Normalbetrieb genutzt werden, da die Betriebssoftware verändert wird und daher die Prozessoreinrichtung nicht auf die Betriebssoftware zugreifen kann. Ein Update stellt somit eine unerwünschte Unterbrechung des Normalbetriebs des Steuergeräts dar.

Aus der DE 10 2007 040 093 A1 ist hierzu ein Verfahren zum Installieren eines Softwaremoduls in einem Steuergerät eines Fahrzeugs bekannt, wobei das Softwaremodul in dem Steuergerät installiert wird, wenn Installationsbedingungen bezüglich zumindest eines Betriebszustandsparameters des Fahrzeugs erfüllt sind, die in dem Softwaremodul angegeben sind. Beispielsweise kann als Betriebszustand derjenige einer Zündung Fahrzeugs überprüft werden.

Denkbar ist ein Update bei geparkten Kraftfahrzeug. Der Betrieb des Steuergeräts bei ausgeschalteter Zündung ist aber in der Regel unerwünscht, da das Steuergerät hierbei elektrische Energie verbraucht, die durch eine Batterie des Kraftfahrzeugs bereitgestellt werden muss, was die Gefahr birgt, dass sich das Kraftfahrzeug aufgrund einer zu stark entladenen Batterie nicht mehr starten lässt.

Aus der DE 100 07 610 A1 ist hierzu bekannt, ein zu programmierendes Steuergerät während einer Nachlaufphase über eine das Steuergerät mit weiteren Steuergeräten vernetzende Datenleitung mit Daten zu versorgen, wobei die weiteren Steuergeräte von der Datenleitung abgeschaltet sind. Durch Begrenzen der Nachlaufzeit, wird verhindert, dass das Steuergerät die Batterie des Kraftfahrzeugs zu tief entlädt.

Nachteilig hierbei ist, dass ein umfangreiches Update, bei welchem besonders viel Zeit zum Verarbeiten der Update-Daten benötigt wird, nicht innerhalb der Nachlaufzeit durchgeführt werden kann.

Der Erfindung liegt die Aufgabe zugrunde, in einem Kraftfahrzeug ein Update einer Betriebssoftware eines Steuergeräts ohne eine für den Benutzer des Kraftfahrzeugs störende Unterbrechung eines Betriebs des Steuergeräts durchzuführen.

Die Aufgabe wird durch die Gegenstände der unabhängigen Patentansprüche gelöst. Vorteilhafte Weiterbildungen der Erfindung ergeben sich durch die Merkmale der abhängigen Patentansprüche.

Durch die Erfindung wird ein Verfahren bereitgestellt, welches eine Parkphase des Kraftfahrzeugs nutzt, um ein Update in einem Steuergerät durchzuführen. Wenn der Benutzer des Kraftfahrzeugs den Motor stoppt und anschließend das Kraftfahrzeug verlässt, bleibt das Steuergerät in einem Low-Power-Modus aktiv, um für eine längere Zeitdauer das Update durchführen zu können. Das erfindungsgemäße Verfahren sieht vor, während der Parkphase, in welcher eine Zündung des Kraftfahrzeugs ausgeschaltet ist, um Geräten des Kraftfahrzeugs abzuschalten. Mindestens eine elektronische Komponente des Steuergeräts, die nicht für das Update benötigt wird, wird auch tatsächlich abgeschaltet. Das Abschalten erfolgt in Abhängigkeit von einem Zündung-aus-Signal, das in dem Kraftfahrzeug zum Einleiten der Parkphase beispielsweise über einen Kommunikations-Bus des Kraftfahrzeugs an das Steuergerät ausgesendet wird. Das Steuergerät empfängt also das Zündung-aus-Signal und schaltet daraufhin mindestens eine elektronische Komponente ab. Hierdurch wird ein Energieverbrauch des Steuergeräts im Vergleich zu einem Betrieb bei eingeschalteter Zündung reduziert. Die Reduktion des Energieverbrauchs beträgt hierbei bevorzugt mindestens 50 Prozent, insbesondere 70 Prozent.

Das Steuergerät wird aber erfindungsgemäß nicht vollständig ausgeschaltet. Stattdessen werden nach Empfangen des Zündung-aus-Signals in dem Steuergerät ein Prozessorkern und eine Speichereinrichtung betrieben. Bei der Speichereinrichtung handelt es sich um diejenige, in welcher eine Betriebssoftware des Steuergeräts für einen Betrieb bei eingeschalteter Zündung gespeichert ist, also die Betriebssoftware für den Normalbetrieb. Während der Parkphase wird nun ein Update der Betriebssoftware durch den Prozessorkern auf Grundlage von Update-Daten durchgeführt.

Indem nur ein kleiner Teil des Steuergeräts "wach" bleibt, kann das Steuergerät für eine längere Zeitdauer zum Durchführen des Updates weiterbetrieben werden, ohne dass hierdurch der Gesamtenergieverbrauch größer ist als bei einem Steuergerät, das vollständig, das heißt mit allen seinen elektronischen Komponenten, weiterbetrieben wird, während das Update durchgeführt wird. Es kann somit ein Update auf der Grundlage von umfangreicheren Update-Daten durchgeführt werden, als dies im Stand der Technik möglich ist.

Das Zündung-Aus-Signal kann beispielsweise ein digitales Signal sein, das ein Klemme-15-Signal repräsentiert, wie es in der Deutschen Industrienorm DIN 72552 definiert ist. In der Parkphase wird entsprechend durch das Ausschalten der Zündung ein Antriebsmotor des Kraftfahrzeugs ausgeschaltet, beispielsweise eine Verbrennungskraftmaschine oder ein Elektromotor, und das beschriebene Steuergerät ausschließlich mit elektrischer Energie aus einer Fahrzeugbatterie des Kraftfahrzeugs betrieben. Das erfindungsgemäße Verfahren beruht auf einem Steuergerät, bei welchem das Steuergerät in eine erste und mindestens eine zweite Powerdomain unterteilt ist, wobei jede Powerdomain jeweils einen Bereich einer elektronischen Schaltung des Steuergeräts darstellt, welcher über eine eigene elektrische Versorgungsleitung mit einem elektrischen Versorgungsanschluss des Steuergeräts verbunden ist. Bei dem Versorgungsanschluss handelt es sich um den Anschluss an das Fahrzeug-Bordnetz, über das die Versorgungsspannung aus der Fahrzeugbatterie empfangen wird. Um nun den Energieverbrauch des Steuergeräts gezielt senken zu können und dennoch das Update durchführen zu können, sind der Prozessorkern und die Speichereinrichtung einerseits und mindestens eine für das Update nicht benötigte elektronische Komponente andererseits in unterschiedlichen Powerdomains angeordnet. Bei Empfangen des Zündung-aus-Signals wird zumindest eine der Powerdomains elektrisch von dem Versorgungsanschluss getrennt. Hierdurch sind die in der Powerdomain befindlichen elektronischen Komponenten dann ausgeschaltet. Die mindestens Powerdomain mit dem Prozessorkern und der Speichereinrichtung bleibt weiterhin mit Spannung versorgt.

Um eine feinere Unterteilung zwischen elektronischen Komponenten, die während der Parkphase betrieben werden, und solchen, die abgeschaltet werden, durchführen zu können und hierdurch aber nicht einen unerwünscht großen Schaltungsaufwand zu erhalten, sieht eine Weiterbildung des Verfahrens vor, dass der Prozessorkern und ein Speichercontroller der Speichereinrichtung durch einen integrierten Schaltkreis mit variabler Taktrate und/oder separat ausschaltbar ausgestalteter Peripherie bereitgestellt ist. Dies ist beispielsweise mittels eines sogenannten System-on-a-Chip (SoC) realisierbar. Eine schaltbare Peripherie kann beispielsweise eine GPU (Graphical Processing Unit), Schnittstellen zum Übertragen von Daten, beispielsweise eine USB-Schnittstelle (USB - Universal Serial Bus), eine UART-Schnittstelle (UART - Universal Asynchronous Receiver Transmitter) und/oder eine HDMI-Schnittstelle (HDMI- High Definition Multimedia Interface) umfassen. Gemäß der Weiterbildung des Verfahrens wird bei dem integrierten Schaltkreis in Abhängigkeit von dem Zündung-aus-Signal die Taktrate reduziert und/oder für das Update unnötige Peripherie abgeschaltet. der Schaltkreis kann z.B. mehrere Powermodi aufweisen, welche sich durch unterschiedliche Taktraten voneinander unterscheiden. Es kann auch ein integrierter Schaltkreis vorgesehen sein, welcher ein Konfigurationsregister aufweist, durch dessen Inhalt festgelegt wird, welche Peripheriekomponenten abgeschaltet werden.

Der Energieverbrauch oder Leistungsbedarf des Steuergeräts während der Pärkphase ist auch davon abhängig, wie aufwendig das Beschaffen der Update-Daten ist. Eine Ausführungsform des Verfahrens sieht vor, dass ein Teil der Update-Daten bereits vor der Parkphase bei eingeschalteter Zündung über eine Funkverbindung, beispielsweise eine Internetverbindung, von außerhalb des Kraftfahrzeugs oder aus einem mit dem Steuergerät gekoppelten portablen Gerät, beispielsweise einem Smartphone, empfangen werden und dann die empfangenen Update-Daten in der Speichereinrichtung zwischengespeichert werden. Hierdurch ergibt sich der Vorteil, dass bei eingeschalteter Zündung elektrische Energie beispielsweise eines Generators des Kraftfahrzeugs zur Verfügung steht und somit das Beschaffen und Abspeichern der Update-Daten nicht zu einer unerwünschten Entladung der Fahrzeugbatterie führt.

Eine andere Weiterbildung des Verfahrens sieht vor, dass zumindest ein Teil der Update-Daten während der Parkphase aus einem mit dem Steuergerät gekoppelten Speichermedium ausgelesen wird, beispielsweise aus einer SD-Karte (SD - Secure Digital Memory Card) oder einer CD-ROM. Das Auslesen aus einem Speichermedium weist den Vorteil auf, dass kein Funkmodul, wie beispielsweise ein Mobilfunkmodul für GSM, UMTS oder LTE (GSM - Global System for Mobile Communications, UMTS - Universal Mobile Telecommunications System, LTE - Long Term Evolution) oder ein Netzwerkmodul, wie beispielsweise ein WLAN-Modul (WLAN - Wireless Local Area Network) betrieben werden muss, welches einen größeren Leistungsbedarf hat als ein Lesegerät für ein portables Speichermedium.

Eine andere Weiterbildung des Verfahrens sieht vor, dass zumindest ein Teil der Update-Daten während der Parkphase aus dem Internet über eine Mobilfunkverbindung und/oder eine WLAN-Verbindung empfangen wird. Hierdurch ergibt sich der Vorteil, dass unabhängig von einem Nutzerverhalten des Benutzers die Update-Daten zur Verfügung stehen. Der Benutzer kann also nicht versehentlich vergessen, beispielsweise das beschriebene portable Speichermedium in die Ausleseeinrichtung für das Speichermedium einzustecken.

Um die Fahrzeugbatterie vor einer Tiefentladung zu schützen, wie sie beispielsweise bei einem Fehler während des Updates und einem dadurch verursachten, unerwünscht langen Betrieb des Steuergeräts verursacht werden kann, sieht eine Weiterbildung des Verfahrens vor, dass durch einen im Steuergerät gespeicherten Timerwert eine maximal für das Update bereitgestellte Zeitdauer vorgegeben wird und durch einen Timer des Steuergeräts in Abhängigkeit von dem Timerwert ein Abbruchsignal zum Beenden des Updates erzeugt wird. Hierdurch ist unabhängig von einem Verlauf des Updates sichergestellt, dass das Steuergerät nur bis höchstens zum Ablauf der durch den Timerwert festgelegten Zeitdauer betrieben wird.

Zum Beenden des Updates wird ein Powercontroller des Steuergeräts (das heißt eine Leistungssteuereinheit oder ein Netzteil) aktiviert und durch den Powercontroller der Prozessorkern und die Speichereinrichtung abgeschaltet. Anschließend kann sich der Powercontroller auch selbst abschalten. Dann ist das Steuergerät abgeschaltet und verbraucht keine elektrische Energie für den Betrieb des Prozessorkerns und der Speichereinrichtung.

In vorteilhafter Weise wird dem Benutzer des Kraftfahrzeugs die Möglichkeit gegeben, den Energieverbrauch der Speichereinrichtung zu steuern, indem er entscheidet, ob überhaupt ein Update durchgeführt werden soll. Bei dieser Ausführung werden der Prozessorkern und die Speichereinrichtung während der Parkphase nur betrieben, falls vor der Parkphase bei eingeschalteter Zündung der Benutzer des Kraftfahrzeugs an einer Bedieneinrichtung des Kraftfahrzeugs, beispielsweise einem Infotainmentsystem des Kraftfahrzeugs, einen Update-Befehl eingegeben hat. Andernfalls wird bei Empfangen des Zündung-aus-Signals das Steuergerät vollständig abgeschaltet.

Wie bereits ausgeführt, gehört zu der Erfindung auch ein Steuergerät für ein Kraftfahrzeug, das eine Empfangseinrichtung zum Empfangen des Zündung-aus-Signals aufweist, also beispielsweise einen Bus-Ankoppler für einen Kommunikationsbus des Kraftfahrzeugs. Des weiteren sind ein Versorgungsanschluss zum Empfangen einer Versorgungsspannung von der Fahrzeugbatterie und eine Elektronik mit mindestens einem Prozessorkern und einer Speichereinrichtung, in welcher die Betriebssoftware für den mindestens einen Prozessorkern gespeichert ist, bereitgestellt. Das erfindungsgemäße Steuergerät ist dazu ausgelegt, eine Ausführungsform des erfindungsgemäßen Verfahrens durchzuführen.

Bevorzugt ist das Steuergerät hierbei als ein Infotainmentsystem für ein Kraftfahrzeug ausgestaltet. Das Steuergerät kann aber auch beispielsweise als Kombiinstrument oder als ein Steuergerät zum Steuern eines Aktors oder eines Sensors des Kraftfahrzeugs ausgelegt sein.

Schließlich gehört zu der Erfindung auch ein Kraftfahrzeug, welches durch mindestens ein Steuergerät gekennzeichnet ist, welches eine Ausführungsform des erfindungsgemäßen Steuergeräts darstellt.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs und
- Fig. 2: ein Diagramm mit einem schematisierten Verlauf eines Stromverbrauchs eines Steuergeräts des Kraftfahrzeugs von Fig. 1.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

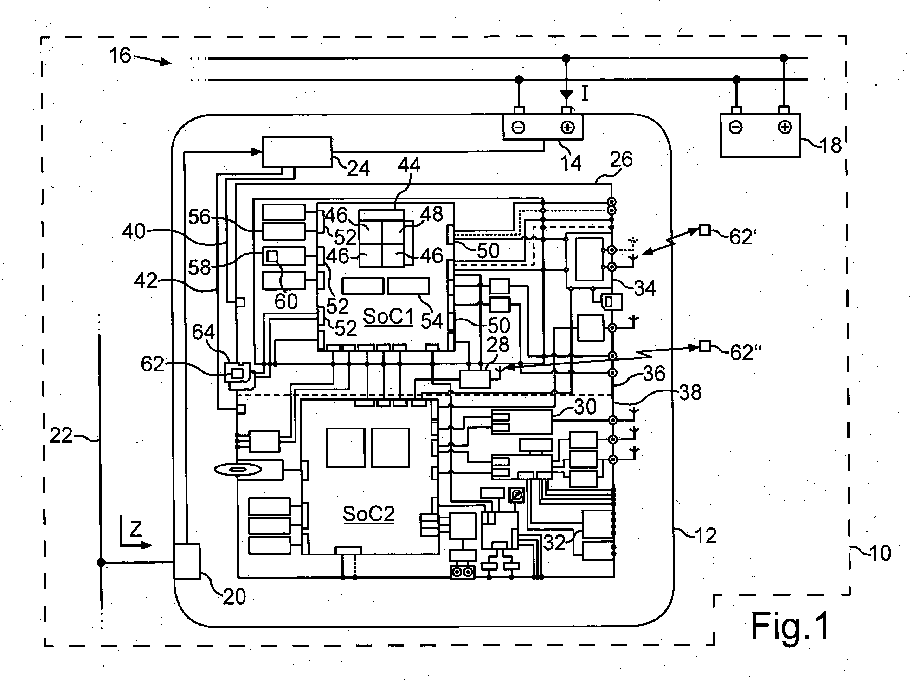

Fig. 1 zeigt ein Kraftfahrzeug, bei dem es sich beispielsweise um einen Kraftwagen, wie beispielsweise einen Personenkraftwagen, handeln kann. Das Kraftfahrzeug 10 kann ein Steuergerät 12 aufweisen, das beispielsweise Bestandteil eines Infotainmentsystems des Kraftfahrzeugs 10 oder eines Kombiinstrument des Kraftfahrzeugs 10 sein kann. Das Steuergerät 12 kann einen Versorgungsanschluss 14 aufweisen, über welchen das Steuergerät 12 an ein Bordnetz 16 zur Versorgung des Steuergeräts 12 mit elektrischer Energie angeschlossen sein kann. Das Bordnetz 16 kann beispielsweise durch eine Fahrzeugbatterie 18 gespeist sein, das heißt über das Bordnetz 16 kann der Versorgungsanschluss 14 mit der Fahrzeugbatterie 18 elektrisch gekoppelt sein. Das Steuergerät 12 kann des Weiteren über einen Bus-Ankoppler oder Bus-Anschluss 20 an einen Kommunikations-Bus 22, beispielsweise einem CAN-Bus (CAN - Controller Area Network) angekoppelt sein.

Bei dem Kraftfahrzeug 10 kann vorgesehen sein, dass das Steuergerät 12 zu Beginn einer Parkphase, wenn ein Benutzer das Kraftfahrzeug 12 ausschaltet, das heißt den Antriebsmotor abschaltet und beispielsweise einen Zündschlüssel aus einem Zündschloss zieht, über den Kommunikations-Bus 22 ein Zündung-aus-Signal Z empfängt, durch welches dem Steuergerät 12 signalisiert wird, dass es in einen Energiesparmodus wechseln muss, damit die Fahrzeugbatterie 18 während der Parkphase nicht unnötig entladen wird.

Das Steuergerät 12 kann zum Steuern seines Energieverbrauchs beispielsweise einen Powercontroller 24 aufweisen, bei dem es sich beispielsweise um ein Netzteil mit eigener Steuerschaltung oder eine andere Schaltungslogik zum Steuern und Verteilen des elektrischen Energieflusses von dem Versorgungsanschluss 14 hin zu einer Geräteelektronik 26 handeln kann. Bei der Geräteelektronik 26 kann es sich beispielsweise um eine Platine handeln, auf welcher für den Betrieb des Steuergeräts 12 benötigte elektronische Komponenten angeordnet sein können.

In dem gezeigten Beispiel umfasst die Geräteelektronik 26 ein erstes System SoC1 (SoC - System-on-a-Chip) sowie ein System SoC2. Des Weiteren kann die Geräteelektronik 26 auch separate Schaltungsmodule aufweisen, wie beispielsweise einen WLAN-Empfänger 28, einen DAB-Empfänger (DAB - Digital Audio Broadcasting), einen Audioverstärker 32 und ein Mobilfunkmodul 34 beispielsweise für LTE oder UMTS. Die genannten Schaltungen sind nur beispielhaft.

Die Geräteelektronik 26 kann beispielhaft in zwei Powerdomains 36, 38 aufgeteilt sein, die jeweils über eine eigene Versorgungsleitung 40, 42 mit dem Powercontroller 24 verbunden sein können. Der Powercontroller 24 kann in Abhängigkeit von dem Zündung-aus-Signal Z eine elektrische Verbindung zwischen den Verbindungsleitungen 40, 42 und dem Versorgungsanschluss 14 unterbrechen, z.B. durch Schalten eines Halbleiterschalters oder eines Relais. In dem gezeigten Beispiel kann vorgesehen sein, dass die Versorgungsleitung 42 für die Powerdomain 38 stromlos geschaltet wird, sodass beispielsweise das System SoC2, der DAB-Empfänger 30 und der Audioverstärker 32 ausgeschaltet werden und somit keine elektrische Energie mehr verbrauchen.

In dem Kraftfahrzeug 10 ist aber vorgesehen, dass das System SoC1 teilweise weiterbetrieben wird, um ein System des Steuergeräts 12 während der Parkphase zu aktualisieren, das heißt ein Update durchzuführen.

Es kann dabei vorgesehen sein, auch innerhalb der Powerdomain 36 oder allgemein einer Powerdomain, Teile davon abzuschalten, die nicht für das Update benötigt werden. In dem gezeigten Beispiel umfasst das System SoC1 einen Prozessor 44 mit beispielsweise vier Prozessorkernen 46, 48. Es kann vorgesehen sein, dass von den vier Prozessorkernen 46, 48 die Prozessorkerne 46 stillgelegt oder deaktiviert werden und nur noch der einzelne Prozessorkern 48 betrieben wird. Des Weiteren kann das System SoC1 auch Peripheriekomponenten 50, 52 und eine GPU (Graphical Processing Unit) 54 aufweisen. Während der Parkphase müssen keine graphischen Daten dargestellt werden, sodass die GPU 54 ebenfalls deaktiviert werden kann. Die Peripheriekomponenten 50 können beispielsweise ein HDMI-Controller (HDMI - High Definition Multi Media Interface) und ein USB-Controller (USB - Universal Serial Bus) sein. Die Peripheriekomponenten 52 können beispielsweise ein SDIO-Controller (SDIO - Speichercontroller für SD-Karten), ein Speichercontroller für RAM-Bausteine 56 und ein Speichercontroller für Flash-Speicherbausteine 58 für das nicht-flüchtige Speichern von Daten sein. In dem Flash-Speicherbaustein 58 ist in dem veranschaulichten Beispiel die Betriebssoftware 60 für das Steuergerät 12 gespeichert, die für den Betrieb des Steuergeräts 12 während des Normalbetriebs, also bei eingeschalteten Kraftfahrzeug 10, genutzt wird. Die Betriebssoftware 60 soll durch ein Update während der Parkphase mittels der Peripherie 52, d.h. mittels des Prozessorkerns 48, der RAM-Speicherbausteine 56 und des Speichercontrollers, aktualisiert werden.

Hierzu kann vorgesehen sein, dass Update-Daten 62 beispielsweise aus einer SD-Karte 64 mittels der Peripherie 52 ausgelesen wird und durch den Prozessorkern 48 in den Flash-Speicher 58 übertragen wird. Es kann auch vorgesehen sein, Update-Daten 62' beispielsweise über das Mobilfunkmodul 34 aus einem (nicht dargestellten) Mobilfunknetzwerk zu empfangen. Es kann auch vorgesehen sein, Update-Daten 62" mittels des WLAN-Funkmoduls 28 zu empfangen.

Indem lediglich während der Parkphase in dem Steuergerät 12 der Prozessorkern 48, die Peripheriekomponenten 52, die RAM-Bausteine 56 und der Flash-Speicher 58 betrieben werden, benötigt das Steuergerät 12 in der Parkphase trotz des Update-Betriebes verhältnismäßig wenig elektrische Energie.

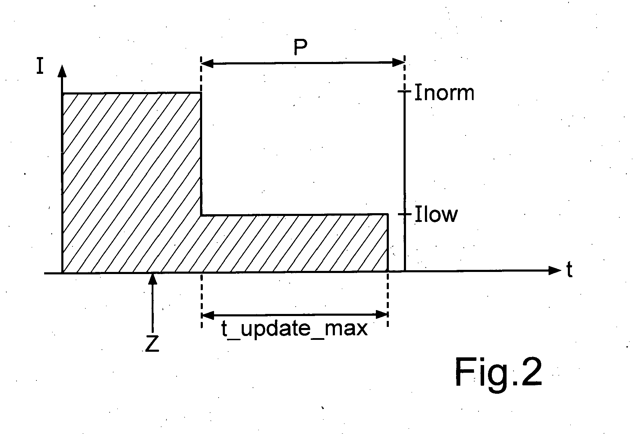

Die Energiereduktion ist in Fig. 2 anhand des Stromverbrauchs des Steuergeräts 12, wie er beispielsweise am Versorgungsanschluss 14 gemessen werden kann, veranschaulicht. Im Normalbetrieb kann beispielsweise der Storm I mit einem Betrag Inorm am Versorgungsanschluss 14 fließen. Mit Empfang des Zündung-aus-Signals Z wird in dem Beispiel durch den Powercontroller 24 die Powerdomain 38 abgeschaltet sowie durch das System SoC1 die Peripheriekomponenten 50 und die GPU 54 beispielhaft abgeschaltet. Hierdurch reduziert sich der Stromverbrauch auf einen Wert Ilow. Damit über der Zeit t auch bei dem geringen Stromverbrauch mit dem Strom Ilow die Fahrzeugbatterie 18 geschont wird und nicht die Wiederstartfähigkeit des Kraftfahrzeugs 10 gefährdet wird, wird innerhalb der Parkphase P der Betrieb des Steuergeräts 12 für den Updatebetrieb auf eine Zeit t_update_max begrenzt, indem dieser Variablenwert, der beispielsweise in einem Bereich von 10 Minuten bis 90 Minuten liegen kann, in einem (nicht dargestellten) Timer des Steuergeräts 12 eingetragen wird, der den Ablauf der Zeit überwacht und am Ende der maximalen Updatezeit t_update_max beispielsweise dem Powercontroller 24 signalisiert, auch die Powerdomain 36 auszuschalten, das heißt die elektrische Verbindung zwischen der Versorgungsleitung 40 und dem Versorgungsanschluss 14 zu unterbrechen. Anschließend kann der Powercontroller 24 dann eine Selbstabschaltung vornehmen. Hierdurch wird dann der Stromverbrauch auf bevorzugt 0 Ampere, zumindest jedoch kleiner als Ilow reduziert.

Mit dem Start des Kraftfahrzeugs 10, der beispielsweise durch ein Zündung-ein-Signal über den Kommunikations-Bus 22 auch dem Steuergerät 12 mitgeteilt werden kann, wird dann in dem Steuergerät 12 das System SoC1 in Betrieb genommen, welches hierzu die Betriebssoftware 60 aus dem Flash-Speicher 58 lädt, wobei es sich hierbei dann um die mittels der Update-Daten 62, 62', 62" erneuerte Betriebssoftware handelt.

Wenn also der Benutzer des Kraftfahrzeugs 10 den Motor stoppt und anschließend das Kraftfahrzeug 10 verlässt, bleibt das Steuergerät 12, also beispielsweise das Infotainment-Steuergerät, in dem beschriebenen Low-Power-Modus aktiv, um für eine längere Dauer ein Update zu laden. Die Updatezeit reduziert sich hierdurch für den Benutzer, da dieser von dem Update während der Parkphase P nichts mitbekommt. Es ist hierfür auch keine größere Batterie nötig, obwohl eine längere Nachlaufzeit, das heißt die Betriebszeit des Steuergeräts 12 nach Motor-Aus, vorliegt. Mit den beschriebenen Methoden konnte die Nachlaufzeit um den Faktor Sechs erhöht werden, ohne dass hierdurch der Energieverbrauch des Steuergeräts 12 größer wäre als für den Fall, dass das Steuergerät 12 vollständig während der Parkphase betrieben würde, um das Update durchzuführen.

Der Benutzer kann das Update beispielsweise starten, während das Steuergerät 12 normal eingeschaltet ist, also während einer Zündung-ein-Phase. Sobald der Benutzer dann das Fahrzeug verlässt und sich das Steuergerät 12 normalerweise schlafen legen würde, bleibt der beschriebene kleine Teil des Steuergeräts 12 wach. Dieser Teil führt dann das Update durch.

Dazu wird das Steuergerät 12 in dem Beispiel in mehrere Powerdomains 36, 38 aufgeteilt. Diese Aufteilung ermöglicht es, dass nicht benötigte Chips und Peripherie abgeschaltet werden können. Zusätzlich wird ein Chip verwendet, der verschiedene Powermodi kennt, beispielsweise den integrierten Schaltkreis Tegra T30 des Unternehmens Nvidea. Dieser Chip wird heruntergetaktet, und nicht benötigte Peripherie, wie beispielsweise die beschriebene GPU, eine SATA-Schnittstelle und ein PCIe, können abgeschaltet werden. Auf dem T30-Prozessor kann dann eine Update-Applikation, also eine spezielle Betriebssoftware für die Parkphase P, ausgeführt werden, die entweder die Update-Daten, die lokal gespeichert sind, installiert oder Update-Daten aus dem Internet in den internen Speicher herunterlädt. Wenn das Update abgeschlossen ist, wird der Powercontroller 24 geweckt, und das Steuergerät 12 schläft vollständig ein.

Die Internetverbindung kann zum Beispiel über das Telefonmodul oder aber auch ein WLAN-Modul erfolgen. Das Update an sich kann auch von einer SD-Karte auf den internen Speicher erfolgen oder auch von einem zusätzlichen internen Speicher auf den internen Speicher für die Betriebssoftware 60. Die maximale Updatezeit wird durch den Timer t_update_max begrenzt.

Insgesamt zeigt also das Beispiel, wie durch die Erfindung bei einem Kraftfahrzeug ein Low-Power-Zustand für ein Systemupdate eines Steuergeräts realisiert werden kann.

## Patentansprüche

1. Verfahren zum Betreiben eines Steuergeräts (12) eines Kraftfahrzeugs (10) während einer Parkphase (P), in welcher eine Zündung des Kraftfahrzeugs (10) zum Abschalten von Geräten des Kraftfahrzeug (10) ausgeschaltet ist, wobei bei dem Verfahren ein zum Einleiten der Parkphase (P) in dem Kraftfahrzeug (10) ausgesendetes Zündung-aus-Signal (Z) durch das Steuergerät (12) empfangen wird und daraufhin mindestens eine elektronische Komponente (38) des Steuergeräts (12) abgeschaltet wird,
**dadurch gekennzeichnet, dass**
nach Empfangen des Zündung-aus-Signals (Z) in dem Steuergerät (12) ein Prozessorkern (48) und eine Speichereinrichtung (52, 58), in welcher eine für einen Betrieb des Steuergeräts (12) bei eingeschalteter Zündung vorgesehene Betriebssoftware (60) gespeichert ist, betrieben werden und während der Parkphase (P) ein Update der Betriebssoftware (60) durch den Prozessorkern (48) auf der Grundlage von Update-Daten (62, 62', 62") durchgeführt wird, wobei
das Steuergerät (12) zum Steuern seines Energieverbrauchs einen Powercontroller (24) aufweist, bei dem es sich um ein Netzteil mit eigener Steuerschaltung handelt, und
das Steuergerät (12) eine Geräteelektronik (26) aufweist, bei der es sich um eine Platine handelt, auf welcher für den Betrieb des Steuergeräts (12) benötigte elektronische Komponenten angeordnet sind, und
die Geräteelektronik (26) in eine erste und mindestens eine zweite Powerdomain (36, 38) unterteilt ist, wobei jede Powerdomain (36, 38) über eine eigene elektrische Versorgungsleitung (40, 42) über den Powercontroller (24) mit einem elektrischen Versorgungsanschluss (14) des Steuergeräts (12) verbunden ist und der Prozessorkern (48) und die Speichereinrichtung (52, 58) einerseits und die mindestens eine abzuschaltende elektronische Komponente (38) andererseits in unterschiedlichen der Powerdomains (36, 38) angeordnet sind und bei Empfangen des Zündung-aus-Signals (Z) zumindest eine der Powerdomains (38) durch den Powercontroller (24) elektrisch von dem Versorgungsanschluss (14) getrennt wird, wobei die Powerdomain (36) mit dem Prozessorkern (48) und der Speichereinrichtung (52, 58) weiterhin mit Spannung versorgt bleibt, wobei
der Prozessorkern (48) und ein Speichercontroller (52) der Speichereinrichtung (52, 58) durch einen integrierten Schaltkreis (SoC1) eines System-on-a-Chip, SoC, mit separat ausschaltbar ausgestalteter Peripherie (50, 52, 54) bereitgestellt ist und in Abhängigkeit von dem Zündung-aus-Signal (Z) die für das Update unnötige Peripherie (50, 54) abgeschaltet wird und wobei
zum Beenden des Updates der Powercontroller (24) aktiviert wird und durch den Powercontroller (24) der Prozessorkern (48) und die Speichereinrichtung (52, 58) abschaltet werden.

2. Verfahren nach Anspruch 1, wobei durch das Ausschalten der Zündung ein Antriebsmotor des Kraftfahrzeugs (10) ausgeschaltet und ausschließlich ein Batteriebetrieb des Steuergeräts (12) mittels einer Fahrzeugbatterie (18) des Kraftfahrzeugs (10) durchgeführt wird.

3. Verfahren nach einem der vorhergehenden Ansprüche, wobei der Prozessorkern (48) und ein Speichercontroller (52) der Speichereinrichtung (52, 58) durch einen integrierten Schaltkreis (SoC1) mit variabler Taktrate bereitgestellt ist und in Abhängigkeit von dem Zündung-aus-Signal (Z) die Taktrate reduziert wird.

4. Verfahren nach einem der vorhergehenden Ansprüche, wobei zumindest ein Teil der Update-Daten bei eingeschalteter Zündung vor der Parkphase a) über eine Funkverbindung von außerhalb des Kraftfahrzeugs (10) oder aus einem mit dem Steuergerät (12) gekoppelten portablen Gerät empfangen und b) in der Speichereinrichtung gespeichert wird.

5. Verfahren nach einem der vorhergehenden Ansprüche, wobei zumindest ein Teil der Update-Daten (62) während der Parkphase (P) aus einem mit dem Steuergerät (12) gekoppelten portablen Speichermedium (64) ausgelesen wird.

6. Verfahren nach einem der vorhergehenden Ansprüche, wobei zumindest ein Teil der Update-Daten (62, 62') während der Parkphase (P) aus dem Internet über eine Mobilfunkverbindung und/oder eine WLAN-Verbindung empfangen wird.

7. Verfahren nach einem der vorhergehenden Ansprüche, wobei durch einen im Steuergerät (12) gespeicherten Timerwert (t_update_max) eine maximal für das Update bereitgestellte Zeitdauer vorgegeben wird und durch einen Timer des Steuergeräts (12) in Abhängigkeit von dem Timerwert (t_update_max) ein Abbruchsignal zum Beenden des Updates erzeugt wird.

8. Verfahren nach einem der vorhergehenden Ansprüche, wobei der Prozessorkern (48) und die Speichereinrichtung (52, 58) während der Parkphase (P) nur betrieben werden, falls vor der Parkphase (P) bei eingeschalteter Zündung durch einen Benutzer des Kraftfahrzeugs (10) an einer Bedieneinrichtung des Kraftfahrzeugs (10) ein Updatebefehl eingegeben worden ist.

9. Steuergerät (12) für ein Kraftfahrzeug (10), wobei das Steuergerät (12) eine Empfangsrichtung (20) zum Empfangen eines Zündung-aus-Signals (Z), einen Versorgungsanschluss (14) zum Empfangen einer Versorgungsspannung und eine Elektronik (26) mit mindestens einem Prozessorkern (48) und mit einer Speichereinrichtung (52, 58), in welcher eine Betriebssoftware (60) für das Steuergerät (12) gespeichert ist, aufweist, **dadurch gekennzeichnet, dass**
das Steuergerät (12) dazu ausgelegt ist, ein Verfahren nach einem der vorhergehenden Ansprüche durchzuführen.

10. Steuergerät (12) nach Anspruch 9, das als Infotainmentsystem oder als Kombiinstrument ausgestaltet ist.

11. Kraftfahrzeug (10) mit mindestens einem Steuergerät (12) nach einem der Ansprüche 9 oder 10.

## Claims

1. Method for operating a control device (12) of a motor vehicle (10) during a parking phase (P), in which an ignition of the motor vehicle (10) is switched off in order to switch off units of the motor vehicle (10), wherein in the method an ignition-off signal (Z) sent out to initiate the parking phase (P) in the motor vehicle (10) is received by the control device (12) and thereafter at least one electronic component (38) of the control device (12) is switched off,
**characterised in that**
after receiving the ignition-off signal (Z) in the control device (12) a processor core (48) and a memory device (52, 58), in which an operating software (60) provided for an operation of the control device (12) when the ignition is switched on is stored, are operated and during the parking phase (P) an update of the operating software (60) is performed by the processor core (48) on the basis of update data (62, 62', 62"), wherein
the control device (12) comprises, for controlling its energy consumption, a power controller (24) which is a power supply with a separate control circuit, and
the control device (12) comprises device electronics (26), in the form of a circuit board, on which electronic components required for the operation of the control device (12) are arranged, and
the device electronics (26) are divided into one first and at least one second power domain (36, 38), wherein each power domain (36, 38) is connected to an electrical supply connection (14) of the control device (12) via an own electrical supply line (40, 42) via the power controller (24) and the processor core (48) and the memory device (52, 58) on the one hand, and the at least one electronic component (38) that can be switched off on the other hand, are arranged in different ones of the power domains (36, 38) and when receiving the ignition-off signal (Z) at least one of the power domains (38) is electrically separated from the supply connection (14) by the power controller (24), wherein the power domain (36) with the processor core (48) and the memory device (52, 58) continues to be supplied with voltage, wherein
the processor core (48) and a memory controller (52) of the memory device (52, 58) is provided by an integrated circuit (SoC1) of a System-on-a-Chip, SoC, with a periphery (50, 52, 54) that can be switched off separately and, based on the ignition-off signal (Z) the periphery (50, 54) that is not required for the update is switched off, and wherein
the power controller (24) is activated for completing the update and the processor core (48) and the memory device (52, 58) are switched off by the power controller (24).

2. Method according to claim 1, wherein the switching off of the ignition causes switching off of a drive motor of the motor vehicle (10) and a battery-only operation of the control device (12) is carried out using a vehicle battery (18) of the motor vehicle (10).

3. Method according to any of the preceding claims, wherein the processor core (48) and a memory controller (52) of the memory device (52, 58) is provided by an integrated circuit (SoC1) with variable clock rate and the clock rate is reduced based on the ignition-off signal (Z).

4. Method according to any of the preceding claims, wherein at least part of the update data is a) received via a wireless connection from outside of the motor vehicle (10) or from a portable device coupled with the control device (12) and b) stored in the memory device when the ignition is switched on before the parking phase.

5. Method according to any of the preceding claims, wherein at least part of the update data (62) is read in a portable storage medium (64) coupled with the control device (12) during the parking phase (P).

6. Method according to any of the preceding claims, wherein at least part of the update data (62, 62') is received from the internet via a mobile phone connection and/or a WLAN connection during the parking phase (P).

7. Method according to any of the preceding claims, wherein a maximum period of time provided for the update is defined by a timer value (t_update_max) stored in the control device (12) and a termination signal for completing the update is generated by a timer of the control device (12) in dependence upon the timer value (t_update_max).

8. Method according to any of the preceding claims, wherein the processor core (48) and the memory device (52, 58) are only operated during the parking phase (P) if before the parking phase (P) an update command was entered by a user of the motor vehicle (10) at an operation device of the motor vehicle (10) with the ignition switched on.

9. Control device (12) for a motor vehicle (10), wherein the control device (12) comprises a receiving device (20) for receiving an ignition-off signal (Z), a supply connection (14) for receiving a supply voltage and an electronic (26) with at least one processor core (48) and with a memory device (52, 58) in which an operating software (60) for the control device (12) is stored,
**characterised in that**
the control device (12) is configured to carry out a method according to any of the preceding claims.

10. Control device (12) according to claim 9 which is configured as an infotainment system or as a combination instrument.

11. Motor vehicle (10) with at least one control device (12) according to one of claims 9 or 10.

## Revendications

1. Procédé de fonctionnement d'un appareil de commande (12) d'un véhicule automobile (10) au cours d'une phase de stationnement (P), dans laquelle un allumage du véhicule automobile (10) est déconnecté pour mettre hors circuit des appareils du véhicule automobile (10), dans lequel, au cours du procédé, un signal de coupure d'allumage (Z) émis pour enclencher la phase de stationnement (P) dans le véhicule automobile (10) est reçu par l'appareil de commande (12) et ensuite au moins un composant électronique (38) de l'appareil de commande (12) est déconnecté,
**caractérisé en ce que**,
après réception du signal de coupure d'allumage (Z) dans l'appareil de commande (12), un noyau de processeur (48) et un dispositif de mémorisation (52, 58), dans lequel un logiciel d'exploitation (60) prévu pour un fonctionnement de l'appareil de commande (12) lors de l'enclenchement d'un allumage est mémorisé, sont exploités et, au cours de la phase de stationnement (P), une mise à jour du logiciel d'exploitation (60) est réalisée par le noyau de processeur (48) sur la base de données de mise à jour (62, 62', 62"), dans lequel :
l'appareil de commande (12) présente pour commander sa consommation d'énergie un régulateur de puissance (24) qui constitue en fait un bloc d'alimentation avec un circuit de commande propre et
l'appareil de commande (12) présente une électronique d'appareillage (26) qui est en fait une platine sur laquelle sont agencés des composants électroniques nécessaires au fonctionnement de l'appareil de commande (12) et
l'électronique d'appareillage (26) est subdivisée en un premier et au moins un second domaine de puissance (36, 38), dans lequel chaque domaine de puissance (36, 38) est connecté à une connexion d'alimentation électrique (14) de l'appareil de commande (12) via une ligne d'alimentation électrique propre (40, 42) via le régulateur de puissance (24) et le noyau de processeur (48) et le dispositif de mémorisation (52, 58), d'une part, et l'au moins un composant électronique à déconnecter (38), d'autre part, sont agencés dans certains différents des domaines de puissance (36, 38) et, à la réception du signal de coupure d'allumage (Z), au moins l'un des domaines de puissance (38) est séparé électriquement de la connexion d'alimentation (14) par le régulateur de puissance (24), dans lequel le domaine de puissance (36) reste en outre alimenté en tension par le noyau de processeur (48) et le dispositif de mémorisation (52, 58), dans lequel :
le noyau de processeur (48) et un régulateur de mémoire (52) du dispositif de mémorisation (52, 58) sont approvisionnés par un circuit de commutation intégré (SoC1) d'un système sur puce SoC avec une périphérie déconnectée séparément déconnectable (50, 52, 54) et la périphérie (50, 54) inutile pour la mise à jour est déconnectée en fonction du signal de coupure d'allumage (Z) et dans lequel :
le régulateur de puissance (24) est activé pour achever la mise à jour et le noyau de processeur (48) et le dispositif de mémorisation (52, 58) sont déconnectés par le régulateur de puissance (24).

2. Procédé selon la revendication 1, dans lequel un moteur d'exploitation du véhicule automobile (10) est déconnecté par déconnexion de l'allumage et une exploitation par batterie de l'appareil de commande (12) est exclusivement réalisé au moyen d'une batterie (18) du véhicule automobile (10).

3. Procédé selon l'une quelconque des revendications précédentes, dans lequel le noyau de processeur (48) et le régulateur de mémoire (52) du dispositif de mémorisation (52, 58) sont alimentés par un circuit de commutation intégré (SoC1) à cadence d'horloge variable et la cadence d'horloge est réduite en fonction du signal de coupure d'allumage (Z).

4. Procédé selon l'une quelconque des revendications précédentes, dans lequel au moins une partie des données de mise à jour est reçue lors de l'allumage enclenché avant la phase de stationnement a) via une liaison radio de l'extérieur du véhicule automobile (10) ou d'un appareil portable couplé à l'appareil de commande (12) et b) mémorisé dans le dispositif de mémorisation.

5. Procédé selon l'une quelconque des revendications précédentes, dans lequel au moins une partie des données de mise à jour (62) est lue au cours de la phase de stationnement (P) dans un support de mémoire portable (64) couplé à l'appareil de commande (12).

6. Procédé selon l'une quelconque des revendications précédentes, dans lequel au moins une partie des données de mise à jour (62, 62') est reçue au cours de la phase de stationnement (P) de l'Internet via une liaison radio mobile et/ou une liaison WLAN.

7. Procédé selon l'une quelconque des revendications précédentes, dans lequel une durée fournie au maximum pour la mise à jour est prédéfinie par une valeur de minuterie (t_update_max) mémorisée dans l'appareil de commande (12) et un signal de rupture pour mettre fin à la mise à jour est produit par une minuterie de l'appareil de commande (12) en fonction de la valeur de minuterie (t_update_max).

8. Procédé selon l'une quelconque des revendications précédentes, dans lequel le noyau de processeur (48) et le dispositif de mémorisation (52, 58) ne sont exploités au cours de la phase de stationnement (P) qu'au cas où, avant la phase de stationnement (P), lors de l'enclenchement de l'allumage par un utilisateur du véhicule automobile (10) dans un dispositif de service du véhicule automobile (10), une commande de mise à jour est saisie.

9. Appareil de commande (12) pour un véhicule automobile (10), dans lequel l'appareil de commande (12) présente un dispositif de réception (20) pour recevoir un signal de coupure d'allumage (Z), une connexion d'alimentation (14) pour recevoir une tension d'alimentation et une électronique (26) avec au moins un noyau de processeur (48) et un dispositif de mémorisation (52, 58), dans lequel un logiciel d'exploitation (60) pour l'appareil de commande (12) est mémorisé,
**caractérisé en ce que**
l'appareil de commande (12) est conçu pour réaliser un procédé selon l'une quelconque des revendications précédentes.

10. Appareil de commande (12) selon la revendication 9, qui est conçu sous la forme d'un système d'info-éducation ou d'instrument combiné.

11. Véhicule automobile (10) avec au moins un appareil de commande (12) selon l'une quelconque des revendications 9 ou 10.
